# EUROPEAN PATENT SPECIFICATION

(11) **EP 1 808 677 B1**
(45) Date of publication and mention of the grant of the patent: **27.04.2011**
(21) Application number: 05027501.5
(22) Date of filing: 15.12.2005
(51) Int. Cl.: G01F 23/00, B01F 13/10, B01F 15/04, G01N 9/02

(54) **Automatic liquid density-regulating device**
Automatische Vorrichtung zur Regulierung der Flüssigkeitsdichte
Dispositif de régulation automatique de la densité d'un liquide

(43) Date of publication of application: 18.07.2007
(73) Proprietor: Logic Art Automatic Co., Ltd., Sanchung City Taipei Hsien (TW)
(72) Inventor: Juan, Pang-Chih, Chung Hsin Rd., Sanchung City Tapei Hsien (TW)
(74) Representative: Viering, Jentschura & Partner

(56) References cited:
- EP-A- 0 143 145
- EP-A- 0 967 474
- EP-A- 1 174 535
- US-A- 4 762 422
- US-A- 5 160 198

## Description

### FIELD OF THE INVENTION

This invention relates to an automatic density-regulating liquid preparation device and particular to a device that functions to flexibly set up a confection flow and automatically infuse powder and cold and hot water (or solvent) for achievement of precise and fast density-regulating liquid preparation.

### BACKGROUND OF THE INVENTION

When liquid (mordant) is conventionally prepared for a degree of density, manually, a container unit (a measuring cup) is used and put on a balance and then the amount of powder and liquid is calculated upon a required ratio; next, the required amount of powder is put in the container unit, and after the powder reaches a required precise weight, a dropper is used to absorb a required amount of liquid and to drop it in the container unit of powder, and the powder and the required liquid is stirred to mix; if the preparation has not yet completed for the required ratio, the container unit is put on the balance again and then a required amount of powder is put in the container unit; next, after the powder reaches the required precise weight, the dropper is used to absorb the required amount of liquid and to drop it in the container unit of powder, and the powder and the required liquid is stirred to mix; the step is repeated until the liquid prepared reaches the required degree of density.

Although all users follow the method mentioned above to prepare liquid for a density currently, they estimate the value on the balance by the naked eye when adding powder in the container unit; further, the dropper is used manually to absorb liquid and then to drop it in the container unit, so errors occur easily during the preparation so that the density of prepared liquid cannot meet the requirements of use; besides, careful adding and dropping of the required ration of powder and liquid by means of manual work is a must for a precise ratio; therefore, it takes much more time to put powder and drop liquid and keep it under control, which makes the speed of preparation low and thus man hour and working procedure waste.

EP-A-1 174 535 describes an apparatus for automated preparation of solutions with a combined metering system for metering liquid products, solid products and solutions, having a structure with a platform upon which are positioned one or more containers for solid products, one or more bottle-like containers for liquid products, one or more containers for solutions and one or more empty and clean bottle-like containers, and having a carriage moveable onto said platform, means, associated with the carriage, for the removal and handling of said bottles and for the removal, handling and actuation of said containers for solid products, and means, including a stirrer and a scale, for preparing solutions and/or mixtures starting from the said solid substances.

US-A-5 160 198 describes a cabinet for storing and stirring products packaged in cans having a stirrer, comprising two contiguous modules, each of said modules comprising a base or case with cells being mounted thereon, each of the cells comprising two vertical panels connected by a plate containing a mechanism for driving coupling members which are complementary to coupling members comprised by the can stirrers.

EP-A-0 967 474 describes a method and a device for determining the density of a suspension, wherein a suspension container having a defined cross-section is used, and wherein both the liquid level of the suspension in the container and the weight of the suspension is measured.

### SUMMARY OF THE INVENTION

Thus, it is an object of this invention that a controlling mechanism is used to flexibly set up a preparation flow and powder and cold and hot water (or solvent) is infused automatically by a powder and liquid supply mechanism for achievement of precise and fast density-regulating liquid preparation.

For the purpose above, the present invention provides an automatic density-regulating liquid preparation device according to claim 1. Further embodiments of the device according to the present invention are described in the dependent claims.

### BRIEF DESCRIPTION OF THE DRAWINGS

Fig. 1 is a schematic view illustrating a device according to this invention
Fig. 2 is a schematic side view illustrating the status of the device according to this invention.
Figs. 3 and 4 are a schematic view illustrating a service condition of the device according to this invention.

### DETAILED DESCRIPTION OF THE PREFERRED EMBODIMENTS

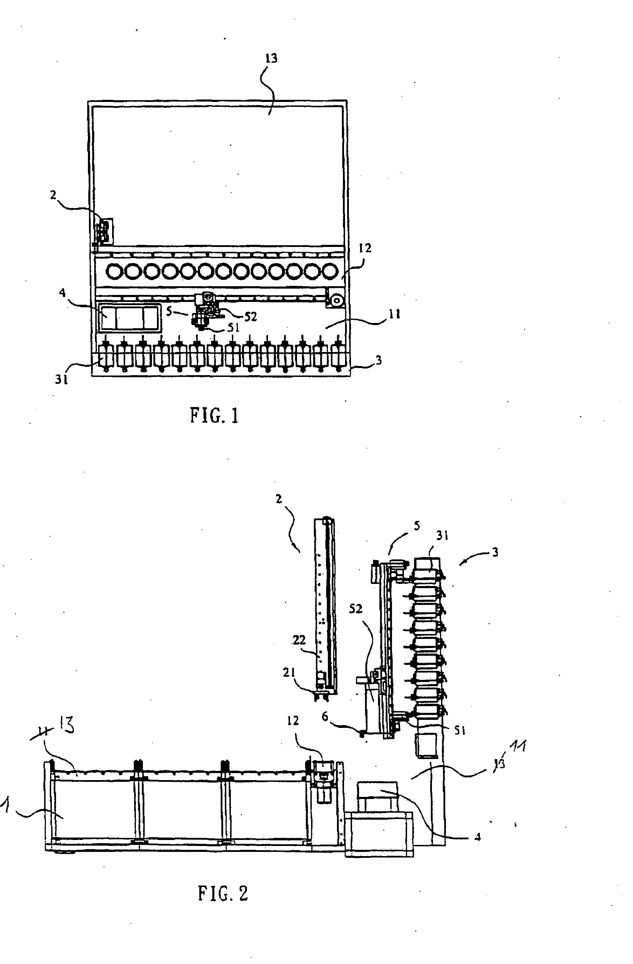

Figs. 1 and 2 are schematic views illustrating a device according to the invention and the side-glance status of the device according to this invention, respectively. As shown in the figures, the automatic density-regulating liquid preparation device according to this invention is structured with a workbench 1, a controlling mechanism 2, a powder supply mechanism 3, a weighing mechanism 4, a liquid supply mechanism 5, and an absorption mechanism 6, being able to flexibly set up a preparation flow and automatically pour powder and cold and hot water for achievement of precise and fast density-regulating liquid preparation.

The workbench 1 described above is provided with a preparation area 11, a stir area 12, and a storage area 13.

The controlling mechanism 2 is located at a side of the workbench 1 and connected with a clipping unit 21, and a control interface 22 is connected between the controlling mechanism 2 and the clipping unit 21.

The powder supply mechanism 3 is located vertically on the preparation area 11 of workbench 1, on which a plurality of container units 31 may be set horizontally.

The weighing mechanism 4 is located on the preparation area 11 of workbench 1 and connected to the controlling mechanism 2.

The liquid supply mechanism 5 is located on the preparation area 11 of workbench 1, located at a side of the weighing mechanism 4, and connected to the controlling mechanism 2, and a water inlet of the liquid supply mechanism 5 is provided with a sense unit 51 to detect a liquid level so as to keep the infused water in a proper level; the mechanism 5 comprises a plurality of liquid supply units 52 respectively supply required hot and cold water and required liquid.

The absorption mechanism 6 is located on the preparation area 11 of workbench 1 and at a side of the weighing mechanism 4. Thus, the brand new automatic density-regulating liquid preparation device is formed with the frameworks above.

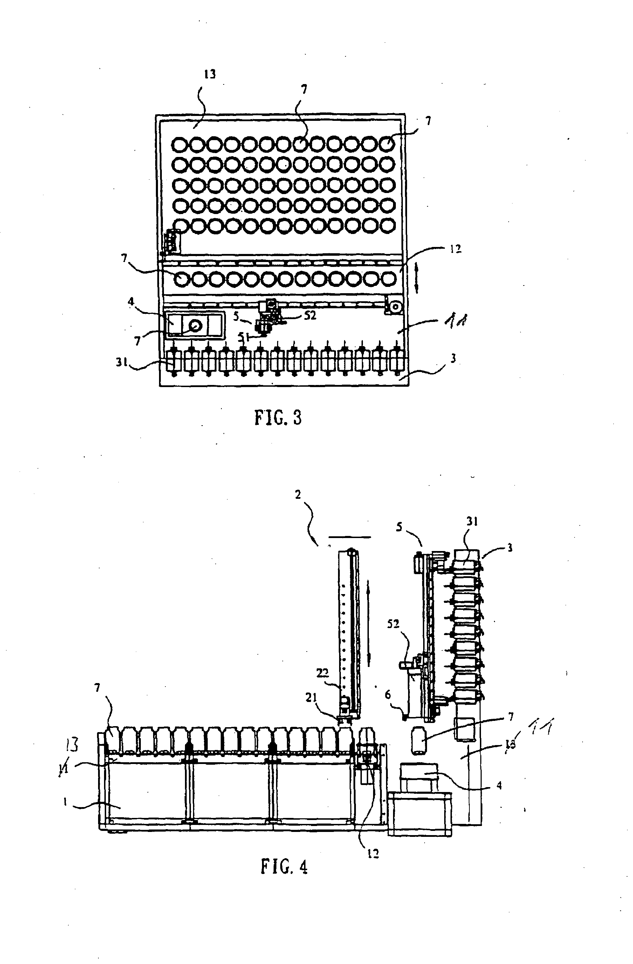

Figs. 3 and 4 are a schematic view illustrating a service condition of the device according to this invention. As shown in the figures, before the device is used, the controlling mechanism 2 may be set for a required amount of proportional powder and water to be poured and then the mechanism 2 started so that the mechanism 2 uses the control interface 22 to have the clipping unit 21 clip a required container 7 in the preparation area 11 of workbench 1 and then place it in the weighing mechanism 4. Next, for the prepared powder, the clipping unit 21 is used to clip a required container unit 31 on the powder supply mechanism 3 so that the powder in the container unit 31 is poured in the container on the weighing mechanism 4 according to the specified ratio, and the weighing mechanism 4 under the container 7 is used to give a feedback of the weight of container 7 to the controlling mechanism 2; when the specified amount of powder in the container 7 reaches a setting range, the control interface 22 of the controlling mechanism 2 gives a command to the clipping unit 21 to stop powder supply and then to place the container unit 31 on the powder supply mechanism 3. Further, the liquid supply mechanism 5 is controlled by the controlling mechanism 2 to infuse hot and cold water and required liquid into the container 7 filled with powder, the sense unit 51 is used to detect a level of liquid in the container 7, and the weighing mechanism 4 dispatches the weight of container 7 to the controlling mechanism 2 so as to keep the infused water in a proper level. After the amount of liquid in the container 7 reaches a set value, the clipping unit 21 is used to move the container 7 to the stir area 12 of workbench 1 to stir. If the liquid has not yet prepared for the required ratio of density, extra powder or liquid is added and the clipping unit 21 is used again to move the container 7 to the weighing mechanism 4 of preparation area 11; next, the absorption mechanism 6 is used to absorb redundant liquid out of the container 7 and the controlling mechanism 2 and the liquid supply mechanism 5 are used repeatedly to have the clipping unit 21 clip the container unit 31 on the powder supply mechanism 3 and pour powder and cold and hot water required in the container 7 until the density of prepared liquid reaches. After preparation, the clipping unit 21 is used again to move the container 7 to the storage area 13 of workbench 1 for users to take it out of to use.

To sum up, the device according to this invention may flexibly set up the preparation flow and automatically pour powder and cold and hot water for achievement of precise and fast density-regulating liquid preparation and further, and further this invention is made to be improved and practical to meet the requirements of application for protection under patent law.

However, in the description mentioned above, only the preferred embodiments according to this invention are provided without limit to this invention and the characteristics of this invention; all those skilled in the art without exception should include the equivalent changes and modifications as falling within the scope of the present invention as defined in the claims.

## Claims

1. An automatic density-regulating liquid preparation device, comprising:
a horizontally extending workbench (1) provided with a preparation area (11), a stir area (12), and a storage area (13);
a controlling mechanism (2) located at a side of the workbench (1);
a powder supply mechanism (3) comprising a plurality of container units (31) having powder therein, the container units (31) being located vertically on the preparation area (11) of the workbench (1) side by side and on top of each other;
a weighing mechanism (4) located on the preparation area (11) of the workbench (1) adjacent to the vertically located container units (31), and connected to the controlling mechanism (2) to dispatch the weight of a container (7) placed thereon to the controlling mechanism (2); and
a liquid supply mechanism (5) for supplying liquid into the container (7) being placed on the weighing mechanism (4), provided on the preparation area (11) of the workbench (1) and at a side of the weighing mechanism (4), and connected to the controlling mechanism (2) which controls infusion of the liquid from the liquid supply system (5) into the container (7), wherein a water inlet of the liquid supply mechanism (5) is provided with a sense unit (51) to detect a liquid level in the container (7);
the controlling mechanism (2) being connected with a clipping unit (21) which is moveable in both the horizontal direction and the vertical direction, and which is adapted to clip a container (7) in the preparation area (11) and then place it in the weighing mechanism (4), to clip a container unit (31) of the powder supply mechanism (3) and pour powder from the container unit (31) into the container (7) on the weighing mechanism (4), and to move the container (7) to the stir area (12), where the powder and the liquid in the container (7) are stirred, and then to the storage area (13), where the container (7) is stored.

2. The device according to claim 1, wherein the controlling mechanism (2) is connected with the clipping unit (21) through a control interface (22).

3. The device according to claim 1, wherein the liquid supply mechanism (5) comprises a plurality of liquid supply units (52) respectively supplying required hot and cold water and required liquid.

## Patentansprüche

1. Eine automatische dichteregulierende Flüssigkeitszubereitungsvorrichtung, aufweisend:
eine sich horizontal erstreckende Werkbank (1), welche mit einem Zubereitungsbereich (11), einem Rührbereich (12) und einem Aufbewahrungsbereich (13) versehen ist,
einen Steuermechanismus (2), welcher an einer Seite der Werkbank (1) angeordnet ist,
einen Pulverzufuhrmechanismus (3), aufweisend eine Mehrzahl von Behältereinheiten (31) mit Pulver darin, wobei die Behältereinheiten (31) an dem Zubereitungsbereich (11) der Werkbank (1) Seite an Seite und übereinander vertikal angeordnet sind,
einen Wiegemechanismus (4), welcher an dem Zubereitungsbereich (11) der Werkbank (1) benachbart zu den vertikal angeordneten Behältereinheiten (31) angeordnet ist und mit dem Steuermechanismus (2) verbunden ist, um das Gewicht eines Behälters (7), der darauf angeordnet ist, an den Steuermechanismus (2) zu senden, und
einen Flüssigkeitszufuhrmechanismus (5) zum Zuführen einer Flüssigkeit in den Behälter (7), der auf dem Wiegemechanismus (4) angeordnet ist, welcher an dem Zubereitungsbereich (11) der Werkbank (1) und an einer Seite des Wiegemechanismus (4) vorgesehen ist und mit dem Steuermechanismus (2) verbunden ist, welcher das Einführen der Flüssigkeit aus dem Flüssigkeitszufuhrsystem (5) in den Behälter (7) steuert, wobei ein Wasserzulauf des Flüssigkeitszufuhrmechanismus (5) mit einer Abtasteinheit (51) versehen ist, um ein Flüssigkeitsniveau in dem Behälter (7) zu detektieren,
wobei der Steuermechanismus (2) mit einer Haltevorrichtung (21) verbunden ist, welche in sowohl der horizontalen Richtung als auch der vertikalen Richtung bewegbar ist und welche angepasst ist, um einen Behälter (7) in dem Zubereitungsbereich (11) zu halten bzw. daran zu befestigen und dann in dem Wiegemechanismus (4) anzuordnen, um eine Behältereinheit (31) des Pulverzufuhrmechanismus (3) zu halten bzw. daran zu befestigen und Pulver von der Behältereinheit (31) in den Behälter (7) auf dem Wiegemechanismus (4) zu schütten und um den Behälter (7) zu dem Rührbereich (12), wo das Pulver und die Flüssigkeit in dem Behälter (7) verrührt werden, und anschließend zu dem Aufbewahrungsbereich (13), wo der Behälter (7) aufbewahrt wird, zu bewegen.

2. Die Vorrichtung gemäß Anspruch 1, wobei der Steuermechanismus (2) mit der Haltevorrichtung (21) über eine Steuerschnittstelle (22) verbunden ist.

3. Die Vorrichtung gemäß Anspruch 1, wobei der Flüssigkeitszufuhrmechanismus (5) eine Mehrzahl von Flüssigkeitszufuhreinheiten (52) aufweist, welche benötigtes heißes bzw. kaltes Wasser bzw. eine benötigte Flüssigkeit zuführen.

## Revendications

1. Dispositif de préparation de liquide de régulation de densité automatique comprenant :
une table de travail (1) s'étendant horizontalement, prévue avec une zone de préparation (11), une zone d'agitation (12) et une zone de stockage (13) ;
un mécanisme de commande (2) positionné au niveau d'un côté de la table de travail (1) ;
un mécanisme d'alimentation de poudre (3) comprenant une pluralité d'unités de récipient (31) ayant la poudre à l'intérieur de ces dernières, les unités de récipient (31) étant positionnées verticalement sur la zone de préparation (11) de la table de travail (1) côte à côte et les unes sur les autres ;
un mécanisme de pesée (4) situé sur la zone de préparation (11) de la table de travail (1), de manière adjacente aux unités de récipient (31) positionnées verticalement, et raccordé au mécanisme de commande (2) pour répartir le poids d'un récipient (7) placé sur ce dernier sur le mécanisme de commande (2) ; et
un mécanisme d'alimentation de liquide (5) pour alimenter le liquide dans le récipient (7) qui est placé sur le mécanisme de pesée (4), prévu sur la zone de préparation (11) de la table de travail (1) et au niveau d'un côté du mécanisme de pesée (4), et raccordé au mécanisme de commande (2) qui commande l'infusion du liquide à partir du système d'alimentation de liquide (5) dans le récipient (7),
dans lequel une entrée d'eau du mécanisme d'alimentation de liquide (5) est prévue avec une unité de détection (51) pour détecter un niveau de liquide dans le récipient (7) ;
le mécanisme de commande (2) étant raccordé avec une unité d'attache (21) qui est mobile à la fois dans la direction horizontale et la direction verticale, et qui est adaptée pour attacher un récipient (7) dans la zone de préparation (11) et le placer ensuite dans le mécanisme de pesée (4), pour attacher une unité de récipient (31) du mécanisme d'alimentation de poudre (3) et déverser la poudre de l'unité de récipient (31) dans le récipient (7) sur le mécanisme de pesée (4), et pour déplacer le récipient (7) dans la zone d'agitation (12), où la poudre et le liquide dans le récipient (7) sont agités, et ensuite dans la zone de stockage (13), où le récipient (7) est stocké.

2. Dispositif selon la revendication 1, dans lequel le mécanisme de commande (2) est raccordé avec l'unité d'attache (21) par l'intermédiaire d'une interface de commande (22).

3. Dispositif selon la revendication 1, dans lequel le mécanisme d'alimentation de liquide (5) comprend une pluralité d'unités d'alimentation de liquide (52) alimentant respectivement l'eau chaude et froide nécessaire et le liquide nécessaire.
